# EUROPEAN PATENT SPECIFICATION

(11) **EP 4 180 250 B1**
(45) Date of publication and mention of the grant of the patent: **16.09.2026**
(21) Application number: 21208114.5
(22) Date of filing: 15.11.2021
(51) Int. Cl.: B60H 1/00

(54) **VEHICLE-USE AIR CONDITIONING DEVICE**
KLIMATISIERUNGSVORRICHTUNG ZUR FAHRZEUGVERWENDUNG
SYSTÈME CLIMATISEUR À UTILISER DANS UN VÉHICULE

(43) Date of publication of application: 17.05.2023
(73) Proprietor: VALEO AUTOKLIMATIZACE s.r.o., CO 269 44 Rakovnik (CZ)
(72) Inventor: BARBIER, Thierry, 78322 Le Mesnil-Saint-Denis Cedex (FR); ANBAZHAGAN, Sandeep, CO 269 44 Rakovnik (CZ); YOSHIZAKI, Hisayoshi, Kumagaya-shi 360-0193 (JP)
(74) Representative: Valeo Powertrain Systems

(56) References cited:
- JP-A- 2012 183 865
- US-A1- 2010 155 015
- US-A1- 2013 014 912

## Description

### BACKGROUND OF THE INVENTION

### 1. Field of the Invention

The present invention relates to a vehicle-use air conditioning device comprising an air mix door including a butterfly door portion.

### 2. Description of the Related Art

A large number of vehicles such as passenger cars include a vehicle-use air conditioning device for adjusting (conditioning) temperature by taking external air or internal air into a vehicle cabin. Existing technology relating to a vehicle-use air conditioning device is disclosed in Patent Literature 1.
D1 (JP 2012 183865 A): D1 discloses a vehicle air conditioning device with a butterfly-type air mix door having a longer first door and a shorter second door, both provided with seals, to adjust airflow through a cold air bypass passage and a warm air passage.
D2 (US 2010/155015 A1): D2 discloses a vehicle heating, ventilation, and air conditioning (HVAC) module that includes an air mixing door for controlling the temperature of air supplied to the vehicle cabin.
D3 (US 2013/014912 A1): D3 discloses an air conditioning unit for a vehicle featuring a temperature regulating door assembly to control the mix of cold and warm air streams.

Fig. 16 is a drawing wherein Fig. 1 of Patent Literature 1 has been reproduced and reference signs reallotted. A vehicle-use air conditioning device 100 disclosed in Patent Literature 1 includes a case 110 through which air taken in from external air or internal air flows. A cooling heat exchanger 101, which can cool air taken in, and a heating heat exchanger 102, which can heat air that has passed through the cooling heat exchanger 101, are housed in the case 110.

A warm air passage 111, along which air that has passed through the heating heat exchanger 102 flows, and a cold air bypass passage 112, along which air that has bypassed the warm air passage 111 and passed through the cooling heat exchanger 101 flows, are provided in an interior of the case 110. Air that has passed through the warm air passage 111 and air that has passed through the cold air bypass passage 112 converge in an air mixing space 113 inside the case 110. Air that has converged in the air mixing space 113 is discharged from aperture portions 115 to 117.

A butterfly type air mix door 120, which can adjust ratios of air that is to flow along the warm air passage 111 and air that is to flow along the cold air bypass passage 112 of air that has passed through the cooling heat exchanger 101, is provided in the cold air bypass passage 112.

The air mix door 120 is a so-called butterfly type of door wherein a plate form first door 122 and a second door 123 can swing with a rotary shaft 121 as a center.

Patent Literature 1: JP-A-2006-168432

When a leading end edge 122a of the first door 122 is in contact with a seat face 118 of the case 110 and a leading end edge 123a of the second door 123 is in contact with a seat face 119 of the case 110, the air mix door 120 is positioned in a full hot position wherein the ratio of air that is to pass along the warm air passage 111 is at a maximum.

A description will be given of an opened state wherein the air mix door 120 has rotated slightly from the full hot position. When comparing dimensions from a central line of the rotary shaft 121 to the leading end edges 122a and 123a of the doors 122 and 123 respectively, the first door 122 is longer than the second door 123. Because of this, an upper side first gap C1 formed by the leading end edge 122a of the first door 122 and the corresponding seat face 118 is wider than a lower side second gap C2 formed by the leading end edge 123a of the second door 123 and the corresponding seat face 119.

An amount of cold air flowing into the air mixing space 113 is relatively large from the first gap C1, which has a larger area, and relatively small from the second gap C2, which has a smaller area. Because of this, a temperature of air inside the air mixing space 113 is such that a temperature in an upper side space near the first gap C1 is lower than a temperature in a lower side space near the second gap C2, and there is a possibility of the temperature gap becoming greater than a range permitted by the design.

As a result, a difference between the temperature of air discharged to an upper body and the temperature of air discharged to feet increases, despite being conditioned air inside the mixing space 113, and an occupant feels uncomfortable. It is desirable that a temperature difference in conditioned air inside the mixing space 113 can be controlled to an appropriate range.

### SUMMARY OF THE INVENTION

The present invention has an object of providing a vehicle-use air conditioning device such that an increase in a temperature difference between regions (a temperature difference between a space near a first gap and a space near a second gap) in conditioned air inside an air mixing space in a state wherein an air mix door including a butterfly door portion, is slightly open, is restricted.

In the following description, reference signs in the attached drawings are added in parentheses in order to facilitate understanding of the present invention, but the present invention is not limited thereby to a form shown in the drawings.

In accordance with the present invention there is provided a vehicle-use air conditioning device as set out in independent claim 1. Preferred embodiments of the present invention are laid down in the appended dependent claims.

In the vehicle-use air conditioning device (10) according to the present invention, when the temperature conditioning position is adopted as a reference, the first seal (43) is configured in such a way that the amount of compression is greater than that of the second seal (53) when in the full hot position. This means that when the rotary shaft (32) rotates slightly from when the butterfly door portion (31) is in the full hot position, and the butterfly door portion (31) reaches the temperature conditioning position, the first seal (43) recovers relatively more than the second seal (53), because of which the gap between the first seat face (35) and the first contact portion (45) of the first seal (43) (the entrance to the mixing space 29) can be narrowed, and/or the gap between the second seat face (36) and the second seal (53) can be widened, in comparison with existing technology. Because of this, cold air flowing into the mixing space (29) from the cold air bypass passage (27) is such that an amount thereof passing through the gap between the first seat face (35) and the first seal (43) decreases, and/or an amount thereof passing through the gap between the second seat face (36) and the second seal (53) increases. According to the above, an increase in a temperature difference between regions (a temperature difference between a space near a first gap and a space near a second gap) in conditioned air inside the air mixing space (29) can be restricted.

### BRIEF DESCRIPTION OF THE DRAWINGS

Fig. 1 is a perspective view of a vehicle-use air conditioning device of a first working example according to the invention.
Fig. 2 is a sectional view along a 2-2 line of Fig. 1.
Fig. 3 is a drawing illustrating a butterfly door portion in a full cool position according to the first working example.
Fig. 4 is a drawing illustrating the butterfly door portion in a full hot position according to the first working example.
Fig. 5 is a drawing illustrating the butterfly door portion in a temperature conditioning position according to the first working example.
Fig. 6 is a perspective view illustrating the butterfly door portion according to the first working example.
Fig. 7A is a drawing illustrating dimensions of seals of the butterfly door portion in the temperature conditioning position according to the first working example. Fig. 7B is a drawing illustrating dimensions of the seals of the butterfly door portion in the full hot position according to the first working example.
Fig. 8A is a drawing illustrating the butterfly door portion in the full hot position. Fig. 8B is a drawing illustrating the butterfly door portion in a one side open position wherein a second seal is separated from a second seat face. Fig. 8C is a drawing illustrating the butterfly door portion in the temperature conditioning position.
Fig. 9A is a drawing showing an action of a butterfly door portion according to a comparative example. Fig. 9B is a drawing showing an action of the butterfly door portion according to the first working example.
Fig. 10 is a drawing illustrating a relationship between a door diameter dimension and a dimension of a gap between a door end side and a case seat face.
Fig. 11 is a drawing illustrating a butterfly door portion in a full hot position according to a second working example which is not according to the invention.
Fig. 12 is a perspective view illustrating the butterfly door portion in a temperature conditioning position according to the second working example.
Fig. 13A is a drawing illustrating dimensions of seals of the butterfly door portion in the temperature conditioning position according to the second working example. Fig. 13B is a drawing illustrating dimensions of the seals of the butterfly door portion in the full hot position according to the second working example.
Fig. 14A is a perspective view illustrating a butterfly door portion according to a modification of the second working example which is not according to the invention. Fig. 14B is a drawing illustrating seals of the butterfly door portion in a full hot position according to the modification of the second working example which is not according to the invention.
Fig. 15 is a sectional view of a vehicle-use air conditioning device according to a third working example according to the invention.

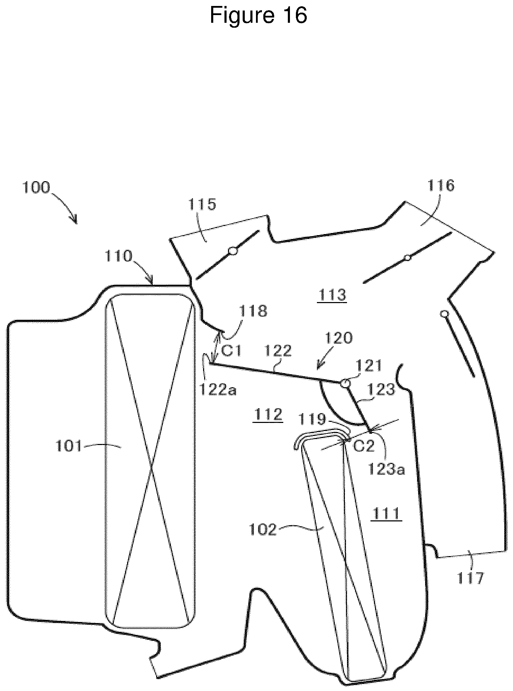

Fig. 16 is a sectional view of a vehicle-use air conditioning device of existing technology.

### DESCRIPTION OF THE PREFERRED EMBODIMENTS

Working examples will be described hereafter based on the attached drawings. In the drawings, Fr indicates front, Rr indicates rear, L indicates left with an occupant inside a vehicle cabin as a reference, R indicates right with an occupant inside the vehicle cabin as a reference, Up indicates up, and Dn indicates down. Furthermore, an "upstream side" and a "downstream side" in the following description have an air flow direction as a reference.

### First Working Example

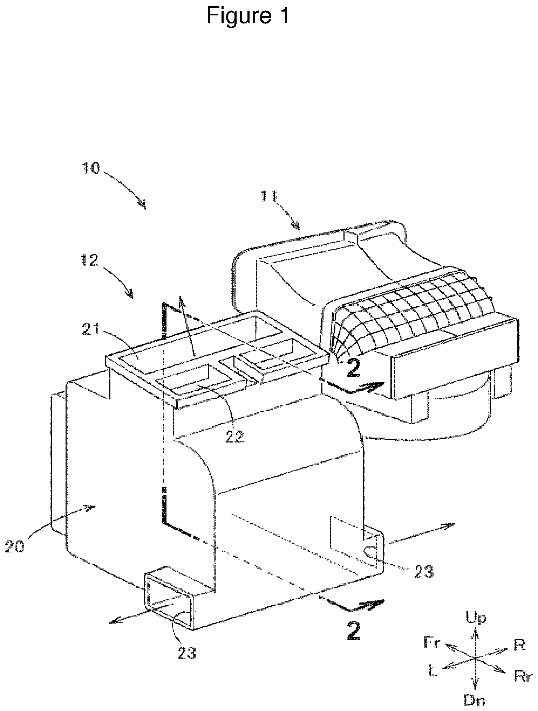

A vehicle-use air conditioning device 10 that adjusts (conditions) temperature by taking external air or internal air into a vehicle cabin is shown in Fig. 1. The vehicle-use air conditioning device 10 is mounted in, for example, a passenger car, and is disposed in such a way as to extend in a lateral direction (a vehicle width direction) at a front of a vehicle cabin interior.

The vehicle-use air conditioning device 10 is configured by an air blowing device 11, which blows suckedin air, and a temperature adjusting device 12, which carries out a temperature adjustment of air blown from the air blowing device 11 and discharges conditioned air to the vehicle cabin interior, being connected.

The air blowing device 11 includes, in an interior thereof, an electric motor (not shown) and an impeller (not shown) driven by the electric motor. On the impeller rotating, air inside the vehicle cabin and/or air outside the vehicle cabin is sucked into the air blowing device 11.

### Case

The temperature adjusting device 12 includes a case 20 through whose interior air sent from the air blowing device 11 (refer to Fig. 1) flows. Aperture portions 21 to 23, which are opened in order to discharge conditioned air, are formed in the case 20.

The aperture portions 21 to 23 include the defroster aperture portion 21, which blows conditioned air toward a windshield, thereby removing windshield clouding, the vent aperture portion 22, which blows conditioned air toward an upper body of a front seat occupant, and the foot aperture portions 23, 23, which blow conditioned air toward legs of a front seat occupant.

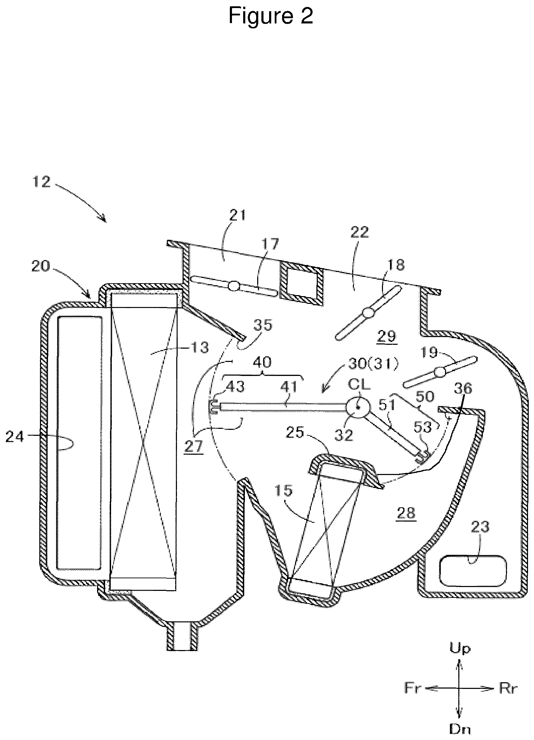

A sectional view of the temperature adjusting device 12 is shown in Fig. 2. The case 20 of the temperature adjusting device 12 has an intake port 24, which is opened in order to take air sent from the air blowing device 11 into the case 20.

### Cooling Heat Exchanger

The case 20 houses a cooling heat exchanger 13 that can cool air that has passed through the intake port 24. A gap between the cooling heat exchanger 13 and the case 20 is preferably filled with a sealing medium (not shown).

### Heating Heat Exchanger

The case 20 houses a heating heat exchanger 15 that can heat air that has passed through the cooling heat exchanger 13. A supporting portion 25 that supports an upper end portion of the heating heat exchanger 15 is provided in the interior of the case 20. A gap between the supporting portion 25 and the upper end portion of the heating heat exchanger 15 is preferably filled with a sealing medium. A gap between a lower end portion of the heating heat exchanger 15 and the case 20 is preferably filled with a sealing medium.

### Heating Path and Cold Air Bypass Passage

A warm air passage 28, along which air that has passed through the heating heat exchanger 15 flows, and a cold air bypass passage 27, along which air that has bypassed the warm air passage 28 flows, are provided in the interior of the case 20. It can be said that the warm air passage 28 and the cold air bypass passage 27 are separated by the supporting portion 25 supporting the heating heat exchanger 15. Furthermore, a mixing space 29, in which air that has passed through the warm air passage 28 and air that has passed through the cold air bypass passage 27 converge, is provided in the interior of the case 20.

The defroster aperture portion 21 can be opened and closed by a switching member 17. The vent aperture portion 22 can be opened and closed by a switching member 18. The foot aperture portions 23, 23 can be opened and closed by switching members 19, 19 (only one switching member 19 is shown).

### Air Mix Door

An air mix door 30, which can adjust ratios of air that is to flow along the warm air passage 28 and air that is to flow along the cold air bypass passage 27 of air that has passed through the cooling heat exchanger 13, is provided in the interior of the case 20.

### Rotary Shaft, First Door, Second Door

The air mix door 30 is a so-called butterfly type of door wherein a plate form first door 40 and second door 50 can swing with a rotary shaft 32 as a center.

The rotary shaft 32 is provided separated from the supporting portion 25 of the heating heat exchanger 15. The rotary shaft 32 is also a part that supports the first door 40 and the second door 50, and is configured of a resin having a predetermined rigidity, or of a metal. When a resin material is adopted as the material of the rotary shaft 32, ABS, polyoxymethylene, polypropylene, polystyrene, polyethylene terephthalate, polybutylene terephthalate, or the like, is used. A central line CL of the rotary shaft 32 extends in a practically perpendicular direction (a front-back direction in the drawing), with air flowing along the cold air bypass passage 27 as a reference.

The first door 40 extends from the rotary shaft 32 to a radial direction outer side of the rotary shaft 32, and can move by swinging in a region farther to the upstream side than the rotary shaft 32. The second door 50 extends from the rotary shaft 32 in a direction practically opposite to the direction in which the first door 40 extends. When the directions in which the doors extend are adopted as references, the second door 50 is shorter than the first door 40.

A configuration including the rotary shaft 32, the first door 40, and the second door 50 is adopted as a butterfly door portion 31. On the rotary shaft 32 being caused to rotate, the first door 40 and the second door 50 swing with the rotary shaft 32 as a center, and the butterfly door portion 31 can be positioned in positions described hereafter.

### Full Cool Position

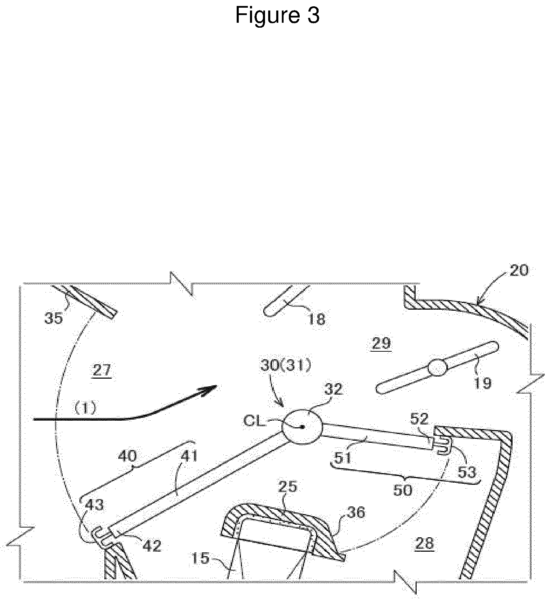

The butterfly door portion 31 in a full cool position is shown in Fig. 3. In the full cool position, the ratio of air flowing along the cold air bypass passage 27 (refer to an arrow (1)) is at a maximum. Each of the doors 40 and 50 is in contact with the case 20. The upstream side of the heating heat exchanger 15 is blocked off by the first door 40. A downstream end of the warm air passage 28 is blocked off by the second door 50.

### Full Hot Position

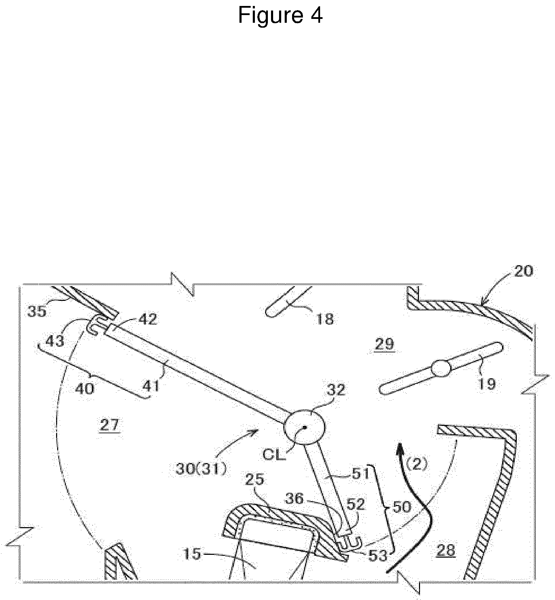

The butterfly door portion 31 in a full hot position is shown in Fig. 4. In the full hot position, the ratio of air flowing along the warm air passage 28 (refer to an arrow (2)) is at a maximum. The cold air bypass passage 27 is blocked off by the first door 40 and the second door 50.

### Temperature Conditioning Position

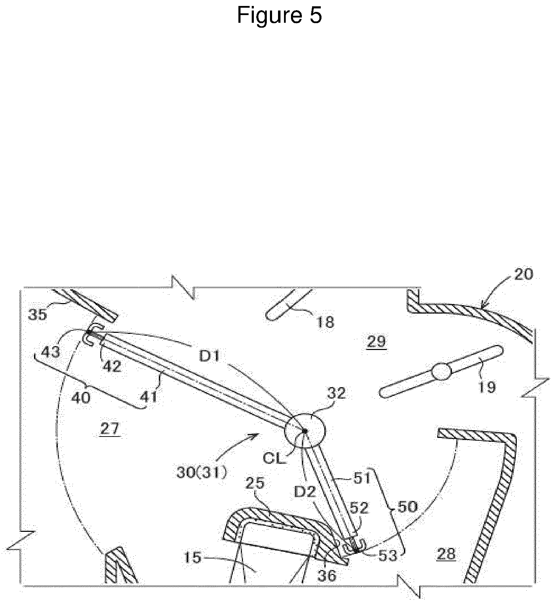

The butterfly door portion 31 in a temperature conditioning position is shown in Fig. 5. A state wherein the butterfly door portion 31 has moved by rotating slightly from the full hot position is shown as one example of a temperature conditioning position. In the temperature conditioning position, neither the ratio of air to flow along the cold air bypass passage 27 nor the ratio of air to flow along the warm air passage 28 is at a maximum. In other words, the ratio of air to flow along the warm air passage 28 is small when compared with that when the butterfly door portion 31 is in the full hot position (refer to Fig. 4). The ratio of air to flow along the cold air bypass passage 27 is small when compared with that when the butterfly door portion 31 is in the full cool position (refer to Fig. 3).

### First Plate

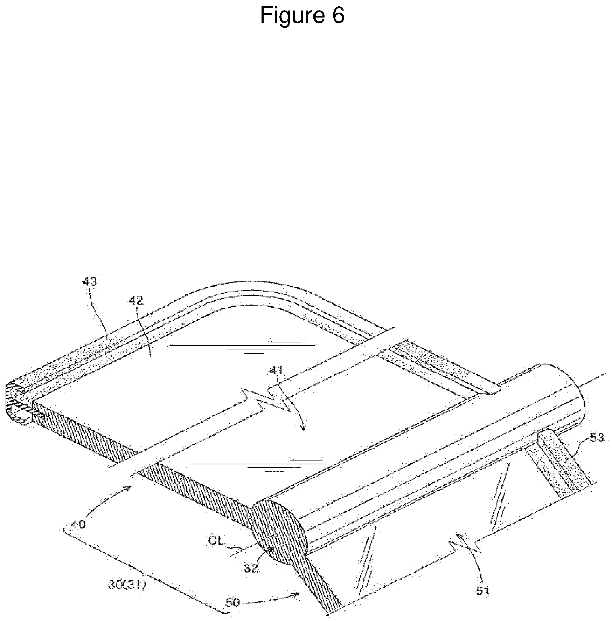

Reference will be made to Fig. 5 and Fig. 6. The first door 40 has a rectangular first plate 41 provided with a predetermined rigidity. A resin material such as ABS, polyoxymethylene, polypropylene, polystyrene, polyethylene terephthalate, or polybutylene terephthalate is used as a material of the first plate 41. Of the first plate 41, an end side on a radial direction outer side of the first plate 41, with the rotary shaft 32 as a reference, is a first end side 42.

### First Seal, First Seat Face

A first seal 43 provided with flexibility is provided on an edge of the first plate 41, including the first end side 42. An elastic body of EPDM rubber, NBR rubber, silicon rubber, or the like, is used as a material of the first seal 43. When the butterfly door portion 31 is in the temperature conditioning position (refer to Fig. 5), the first seal 43 is separated from a first seat face 35 in the case 20. When the butterfly door portion 31 is in the full hot position (refer to Fig. 4), the first seal 43 is in close contact with the first seat face 35. The first seal 43 blocks off a gap between the first end side 42 and the first seat face 35.

### Second Plate

The second door 50 has a rectangular second plate 51 provided with a predetermined rigidity. A resin material such as ABS, polyoxymethylene, polypropylene, polystyrene, polyethylene terephthalate, or polybutylene terephthalate is used as a material of the second plate 51. Of the second plate 51, an end side on a radial direction outer side of the second plate 51, with the rotary shaft 32 as a reference, is a second end side 52.

### Second Seal, Second Seat Face

A second seal 53 provided with flexibility is provided on an edge of the second plate 51, including the second end side 52. An elastic body of EPDM rubber, NBR rubber, silicon rubber, or the like, is used as a material of the second seal 53. When the butterfly door portion 31 is in the temperature conditioning position (refer to Fig. 5), the second seal 53 is separated from a second seat face 36 in the case 20. When the butterfly door portion 31 is in the full hot position (refer to Fig. 4), the second seal 53 is in close contact with the second seat face 36. The second seal 53 blocks off a gap between the second end side 52 and the second seat face 36.

### First Contact Portion, First Seal Dimension

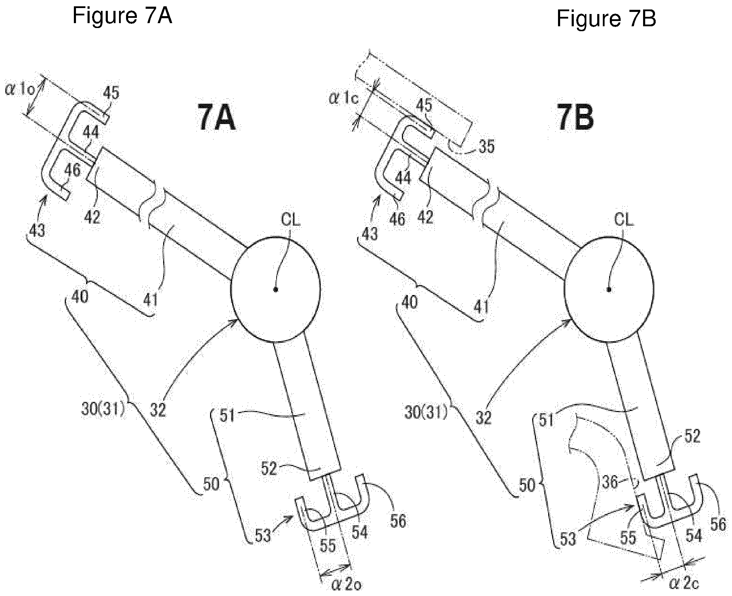

With the butterfly door portion 31 in the temperature conditioning position, as shown in Fig. 7A, as a reference, the first seal 43 is more compressed than the second seal 53 when the butterfly door portion 31 is in the full hot position, as shown in Fig. 7B. A detailed configuration will be described hereafter.

Reference will be made to Fig. 7A. A cross-section of the first seal 43 is of an approximate T-shape overall. The first seal 43 is configured by a first base portion 44 supported by the first end side 42 of the first plate 41, a first hot side contact portion 45 (a first contact portion), which is in contact with the first sheet face 35 in the full hot position (refer to Fig. 5), and a first cool side contact portion 46, which is in contact with the case 20 in the full cool position, being integrated.

When the butterfly door portion 31 is in the temperature conditioning position (refer to Fig. 7A), a dimension from the first end side 42 (a thickness direction center of the first plate 41) to the first hot side contact portion 45, with a direction of compression of the first seal 43 as a reference, is a first seal dimension α1o.

Reference will be made to Fig. 7B. When the butterfly door portion 31 is in the full hot position, a dimension from the first end side 42 to the first hot side contact portion 45, with the direction of compression of the first seal 43 as a reference, is a first compressed dimension α1c.

### First Compression Amount

A ratio of the dimension of the first seal 43 in the full hot position with respect to that in the temperature conditioning position, with the direction of compression of the first seal 43 as a reference, is a first compression amount C1a. When using the first seal dimension α1o before compression and the first compressed dimension α1c after compression, the first compression amount C1a is expressed by the following equation. $C 1 a = α 1 o - α 1 c$

For example, when the first seal dimension α1o is 10 millimeters and the first compressed dimension α1c is 6 millimeters, the first compression amount C1a is 4 millimeters. It can be said that the greater the value of the first compression amount C1a, the greater the amount of change in the dimension after compression with respect to that before compression (before the first seal 43 comes into contact with the first seat face 35).

### Second Contact Portion, Second Seal Dimension

Reference will be made to Fig. 7A. The second seal 53 is of an approximate T-shape overall. The second seal 53 is configured by a second base portion 54 supported by the second end side 52 of the second plate 51, a second hot side contact portion 55 (a second contact portion), which is in contact with the second sheet face 36 (refer to Fig. 5) in the full hot position, and a second cool side contact portion 56, which is in contact with the case 20 in the full cool position, being integrated.

When the butterfly door portion 31 is in the temperature conditioning position (refer to Fig. 7A), a dimension from the second end side 52 (a thickness direction center of the second plate 51) to the second hot side contact portion 55, with a direction of compression of the second seal 53 as a reference, is a second seal dimension α2o. The first seal dimension α1o is longer than the second seal dimension α2o (α1o > α2o).

Reference will be made to Fig. 7B. When the butterfly door portion 31 is in the full hot position, a dimension from the second end side 52 to the second hot side contact portion 55, with the direction of compression of the second seal 53 as a reference, is a second compressed dimension α2c.

### Second Compression Amount

An amount of change in the dimension of the second seal 53 in the full hot position with respect to that in the temperature conditioning position, with the direction of compression of the second seal 53 as a reference, is a second compression amount C2a. When using the second seal dimension α2o before compression and the second compressed dimension α2c after compression, the second compression amount C2a is expressed by the following equation. $C 2 a = α 2 o - α 2 c$

For example, when the second seal dimension α2o is 6 millimeters and the second compressed dimension α2c is 3 millimeters, the second compression amount C2a is 3 millimeters. It can be said that the greater the value of the second compression amount C2a, the greater the amount of change in the dimension after compression with respect to that before compression (before the second seal 53 comes into contact with the second seat face 36).

### Comparison of First Seal and Second Seal

As heretofore described, the first seal 43 is compressed more than the second seal 53 when in the full hot position. That is, the first compression amount C1a is greater than the second compression amount C2a (C1a > C2a).

### Advantage of First Working Example

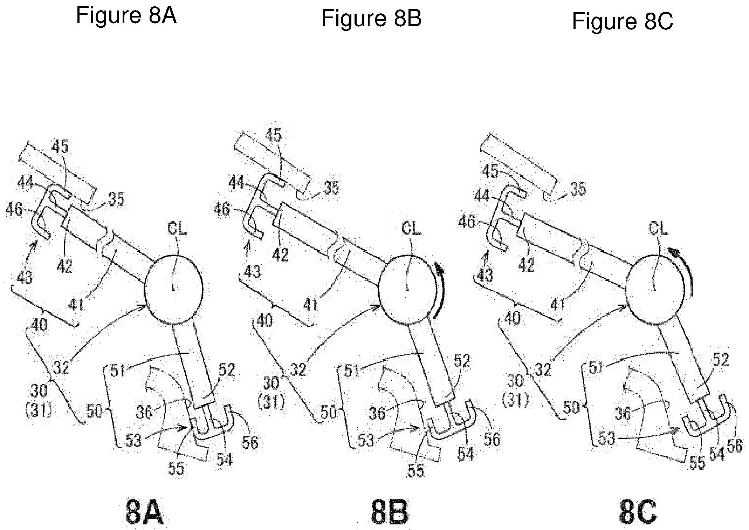

In a case wherein the first compression amount C1a is sufficiently greater than the second compression amount C2a, a one side open position wherein the second seal 53 is separated from the second seat face 36 while the first hot side contact portion 45 of the first seal 43 remains in contact with the first seat face 35 is reached, as shown in Fig. 8B, when the butterfly door portion 31 rotates in an opening direction (a counterclockwise direction) from the full hot position shown in Fig. 8A. It can be said that even when the second seal 53 separates from the second seat face 36 and recovers, there is still scope for the first seal 43 to recover. Furthermore, on the butterfly door portion 31 rotating in the opening direction (counterclockwise direction) from the one side open position of Fig. 8B, the temperature conditioning position wherein the first seal 43 is separated from the first seat face 35 and the second seal 53 is separated from the second seat face 36 is reached, as shown in Fig. 8C.

### Comparison of Comparative Example and First Working Example

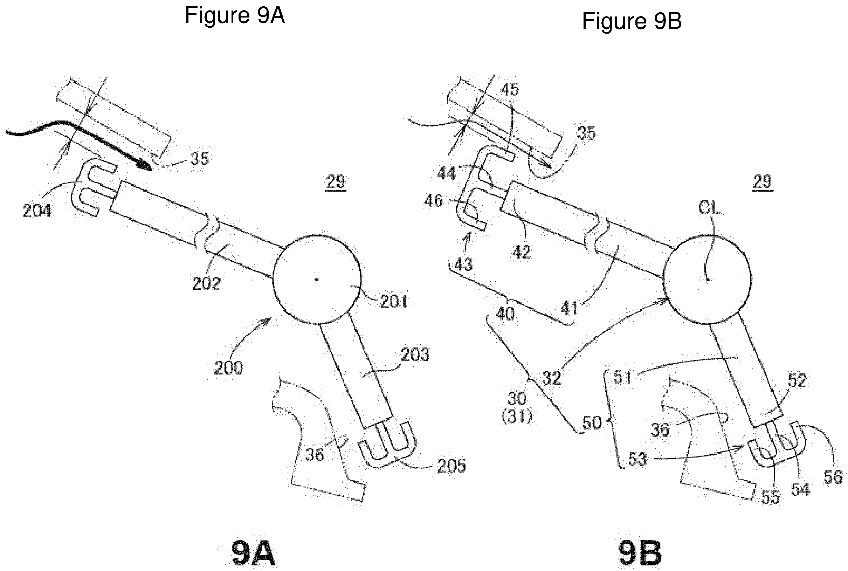

A butterfly door portion 200 according to a comparative example is shown in Fig. 9A. The butterfly door portion 200 includes a first door 202 and a second door 203 that can swing with a rotary shaft 201 as a center. The first door 202 is longer than the second door 203. Sizes of a first seal 204 and a second seal 205 are set to be the same. This means that when the butterfly door portion 200 is in the temperature conditioning position, a large amount of cold air flows into the mixing space 29 from between the first seal 204 and the seat face 35.

As shown in Fig. 7A, the first seal dimension α1o of the butterfly door portion 31 of the first working example is longer than the second seal dimension α2o (α1o > α2o). This means that the first seal 43 recovers further in the temperature conditioning position shown in Fig. 9B, and the gap between the first seat face 35 and the first hot side contact portion 45 of the first seal 43 (the entrance to the mixing space 29) can be narrowed. As a flow path area of the entrance to the mixing space 29 decreases in comparison with that in the comparative example, cold air is less likely to flow into the mixing space 29 through the gap between the first seat face 35 and the first seal 43. A temperature difference in conditioned air inside the mixing space 29 can be reduced.

### Relationship between Door Diameter Dimension and Gap

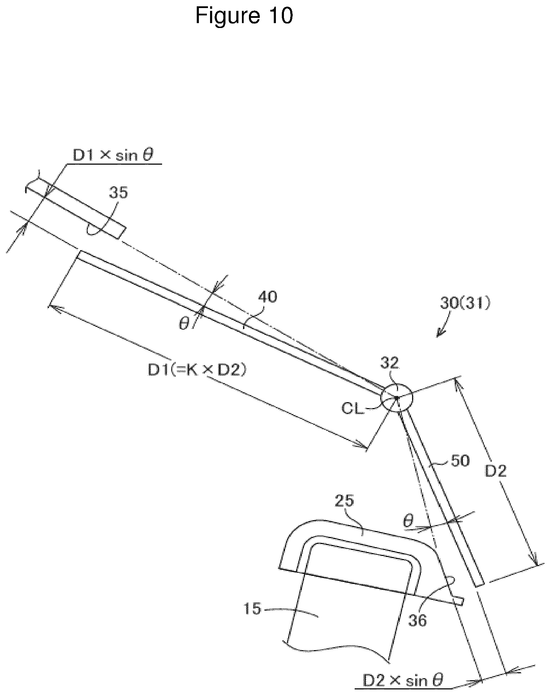

Reference will be made to Fig. 10. A door diameter dimension, which is a dimension of a whole door including a seal, will be described. For the sake of convenience in describing the dimension, the first door 40 and the second door 50 are drawn schematically by integrating a plate and a seal.

The butterfly door portion 31 shown in Fig. 10 is positioned in a place such that the rotary shaft 32 has rotated slightly from the full hot position (for example, an angle of rotation θ is around 5°). An angle formed by the first door 40 with respect to a reference line joining the central line CL of the rotary shaft 32 and the first seat face 35 and an angle formed by the second door 50 with respect to a reference line joining the central line CL of the rotary shaft 32 and the second seat face 36 are equal.

With the radial direction of the rotary shaft 32 as a reference, a dimension from the central line CL of the rotary shaft 32 to the first seal 43 (refer to Fig. 5) is a first door diameter dimension D1. A dimension of a gap between an end portion on a radial direction outer side of the first door 40 and the first seat face 35 is D1 × sinθ. A dimension from the central line CL of the rotary shaft 32 to the second seal 53 (refer to Fig. 5) is a second door diameter dimension D2. A dimension of a gap between an end portion on a radial direction outer side of the second door 50 and the second seat face 36 is D2 × sinθ.

When comparing the dimensions of these two gaps, D1 × sinθ:D2 × sinθ = D1:D2. Consequently, it can be said that a ratio between the gaps between the doors 40 and 50 and the seat faces 35 and 36 respectively is equivalent to a ratio between the door diameters (D1:D2).

### First Seal Dimension Setting

When the ratio of the first door diameter dimension D1 with respect to the second door diameter dimension D2 is a dimension ratio K, the first seal dimension α1o and the second seal dimension α2o shown in Fig. 7 preferably have the following relationship. $α 1 o > K \times α 2 o$

For example, when the dimension ratio K is 1.5 and the second seal dimension α2o is 6 millimeters, the first seal dimension α1o is preferably greater than 9 millimeters. When a first gap dimension γ1 to be described hereafter (a dimension from a first end side 42A to the first seat face 35, with a direction of compression of a first seal 43A as a reference, when a butterfly door portion 31A is in the full hot position) is the same as a second gap dimension γ2 (a dimension from a second end side 52A to the second seat face 36, with a direction of compression of a second seal 53A as a reference, when a butterfly door portion 31A is in the full hot position), or smaller than the second gap dimension γ2, a one side open position wherein the second seal 53 is separated from the second seat face 36 while the first hot side contact portion 45 of the first seal 43 remains in contact with the first seat face 35 can be obtained, as shown in Fig. 8B. An increase in a temperature difference between regions (a temperature difference between a space near a first gap and a space near a second gap) in conditioned air inside an air mixing space can be more reliably restricted.

### Second Working Example

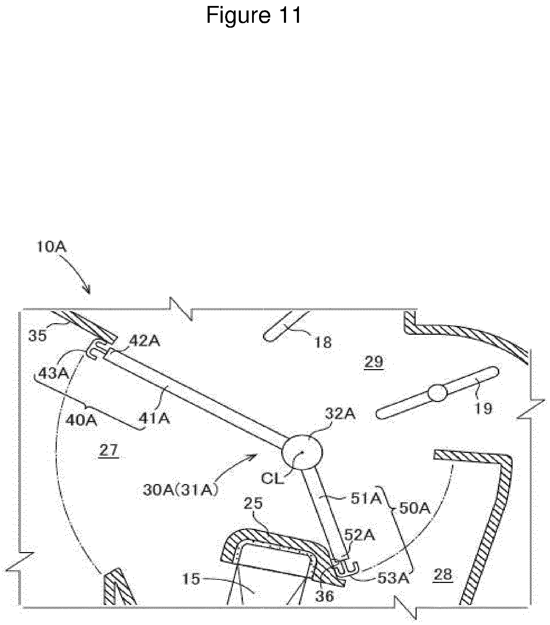

A vehicle-use air conditioning device 10A according to a second working example is shown in Fig. 11 to Fig. 13. The same reference signs as in the first working example are allotted to configurations in common with those of the vehicle-use air conditioning device 10 of the first working example, and a description thereof will be omitted.

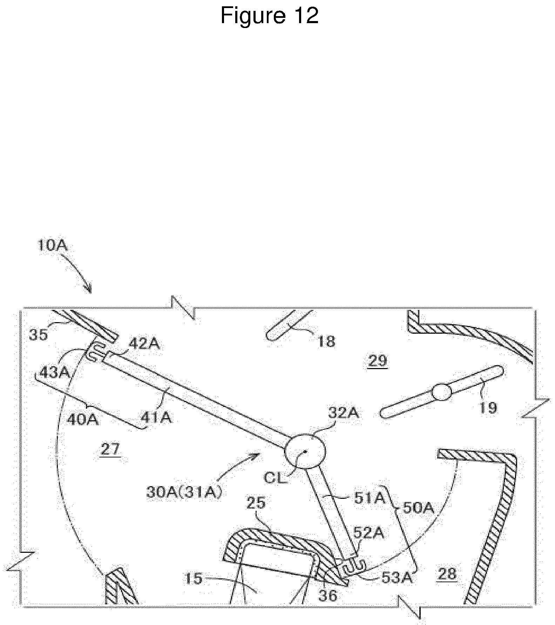

The butterfly door portion 31A of an air mix door 30A, which is in the full hot position, is shown in Fig. 11. The butterfly door portion 31A in the temperature conditioning position is shown in Fig. 12. A description of the butterfly door portion 31A in the full cool position will be omitted. A function of the butterfly door portion 31A in each position is the same as that of the butterfly door portion 31 of the first working example.

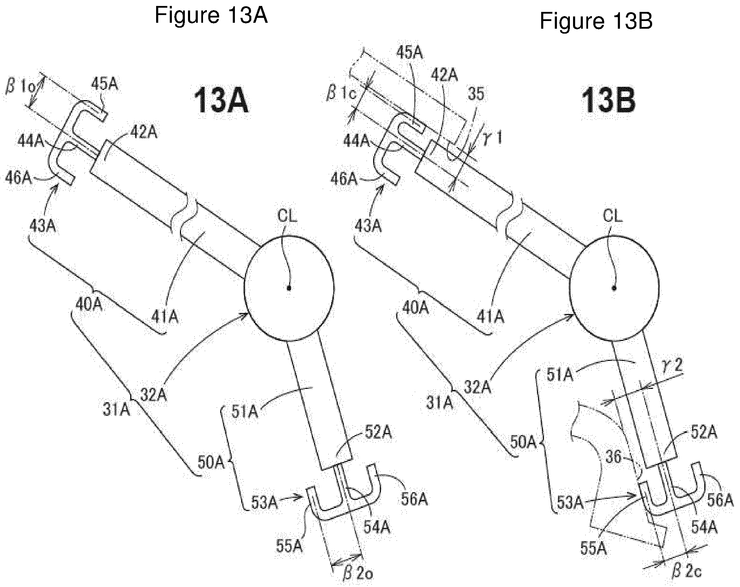

Reference will be made to Fig. 13A. A first door 40A has a first plate 41A provided with a predetermined rigidity. Of the first plate 41A, an end side on a radial direction outer side of the first plate 41A, with the rotary shaft 32 as a reference, is a first end side 42A.

### First Seal, First Seat Face

A first seal 43A provided with flexibility is provided on an edge of the first plate 41A, including the first end side 42A. When the butterfly door portion 31A is in the temperature conditioning position (refer to Fig. 12), the first seal 43A is separated from the first seat face 35 in the case 20. When the butterfly door portion 31A is in the full hot position (refer to Fig. 11), the first seal 43A is in close contact with the first seat face 35. The first seal 43A blocks off a gap between the first end side 42A and the first seat face 35.

### Second Plate

The second door 50A has a second plate 51A provided with a predetermined rigidity. Of the second plate 51A, an end side on a radial direction outer side of the second plate 51A, with the rotary shaft 32 as a reference, is a second end side 52A.

### Second Seal, Second Seat Face

A second seal 53A provided with flexibility is provided on an edge of the second plate 51A, including the second end side 52A. When the butterfly door portion 31A is in the temperature conditioning position (refer to Fig. 12), the second seal 53A is separated from the second seat face 36 in the case 20. When the butterfly door portion 31A is in the full hot position (refer to Fig. 11), the second seal 53A is in close contact with the second seat face 36. The second seal 53A blocks off a gap between the second end side 52A and the second seat face 36.

### First Contact Portion, First Seal Dimension

With the butterfly door portion 31A in the temperature conditioning position, as shown in Fig. 13A, as a reference, the first seal 43A is more compressed than the second seal 53A when the butterfly door portion 31A is in the full hot position, as shown in Fig. 13B. A detailed configuration will be described hereafter.

Reference will be made to Fig. 13A. A cross-section of the first seal 43A is of an approximate T-shape overall. The first seal 43A is configured by a first base portion 44A supported by the first end side 42A of the first plate 41A, a first hot side contact portion 45A (a first contact portion), which is in contact with the first sheet face 35 in the full hot position (refer to Fig. 13), and a first cool side contact portion 46A, which is in contact with the case 20 in the full cool position, being integrated.

When the butterfly door portion 31A is in the temperature conditioning position, a dimension from the first end side 42A to the first hot side contact portion 45, with a direction of compression of the first seal 43A as a reference, is a first seal dimension β1o.

Reference will be made to Fig. 13B. When the butterfly door portion 31A is in the full hot position, a dimension from the first end side 42A to the first hot side contact portion 45A, with the direction of compression of the first seal 43A as a reference, is a first compressed dimension β1c.

### First Compression Amount

An amount of change in the dimension of the first seal 43A in the full hot position with respect to that in the temperature conditioning position, with the direction of compression of the first seal 43A as a reference, is a first compression amount C1b. When using the first seal dimension β1o before compression and the first compressed dimension β1c after compression, the first compression amount C1b is expressed by the following equation. $C 1 b = β 1 o - β 1 c$

For example, when the first seal dimension β1o is 6 millimeters and the first compressed dimension β1c is 3 millimeters, the first compression amount C1b is 3 millimeters. It can be said that the greater the value of the first compression amount C1b, the greater the amount of change in the dimension after compression with respect to that before compression (before the first seal 43A comes into contact with the first seat face 35).

### Second Contact Portion, Second Seal Dimension

Reference will be made to Fig. 13A. The second seal 53A is of an approximate T-shape overall. The second seal 53A is configured by a second base portion 54A supported by the second end side 52A of the second plate 51A, a second hot side contact portion 55A (a second contact portion), which is in contact with the second sheet face 36 in the full hot position (refer to Fig. 13B), and a second cool side contact portion 56A, which is in contact with the case 20 in the full cool position, being integrated.

When the butterfly door portion 31A is in the temperature conditioning position (refer to Fig. 13A), a dimension from the second end side 52A to the second hot side contact portion 55A, with a direction of compression of the second seal 53A as a reference, is a second seal dimension β2o. The first seal dimension β1o and the second seal dimension β2o are equal.

Reference will be made to Fig. 13B. When the butterfly door portion 31A is in the full hot position, a dimension from the second end side 52A to the second hot side contact portion 55A, with the direction of compression of the second seal 53A as a reference, is a second compressed dimension β2c. The first compressed dimension β1c is smaller than the second compressed dimension β2c.

### Second Compression Amount

An amount of change in the dimension of the second seal 53A in the full hot position with respect to that in the temperature conditioning position, with the direction of compression of the second seal 53A as a reference, is a second compression amount C2b. When using the second seal dimension β2o before compression and the second compressed dimension β2c after compression, the second compression amount C2b is expressed by the following equation. $C 2 b = β 2 o - β 2 c$

For example, when the second seal dimension β2o is 6 millimeters and the second compressed dimension β2c is 4 millimeters, the second compression amount C2b is 2 millimeters. It can be said that the greater the value of the second compression amount C2b, the greater the amount of change in the dimension after compression with respect to that before compression (before the second seal 53A comes into contact with the second seat face 36).

### Comparison of First Seal and Second Seal

As heretofore described, the first seal 43A is compressed more than the second seal 53A when in the full hot position. That is, the first compression amount C1b is greater than the second compression amount C2b (C1b > C2b). As a description of an advantage of the first compression amount C1b being greater than the second compression amount C2b is the same as in the first working example, the description will be omitted.

### Comparison of First Gap Dimension and Second Gap Dimension

The dimension from the first end side 42A to the first seat face 35, with the direction of compression of the first seal 43A as a reference, when the butterfly door portion 31A is in the full hot position is the first gap dimension γ1. The dimension from the second end side 52A to the second seat face 36, with the direction of compression of the second seal 53A as a reference, when the butterfly door portion 31A is in the full hot position is the second gap dimension γ2. The first gap dimension γ1 is smaller than the second gap dimension γ2 (γ1 < γ2).

In the heretofore described second working example, the first seal dimension β1o may be set to be equal to the second seal dimension β2o (β1o = β2o), or may be set to be longer than the second seal dimension β2o (β1o > β2o).

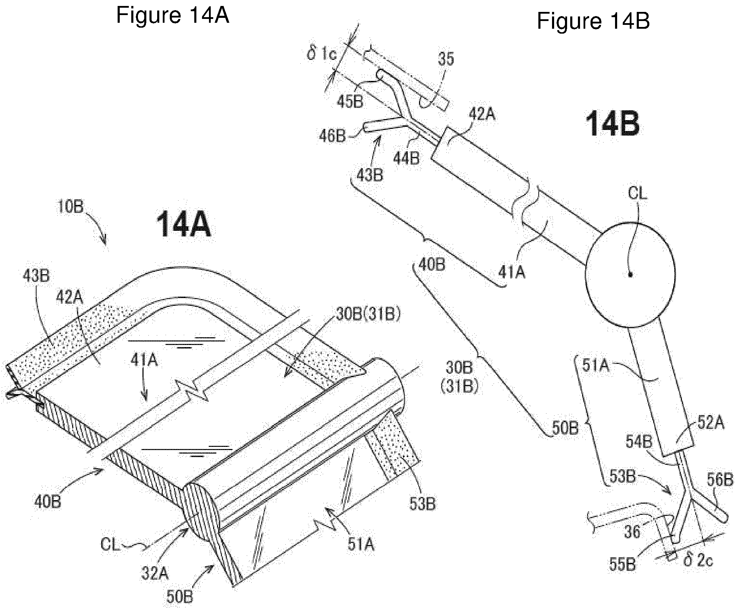

A vehicle-use air conditioning device 10B according to a modification of the second working example is shown in Fig. 14A and Fig. 14B. The same reference signs as in the second working example are allotted to configurations in common with those of the vehicle-use air conditioning device 10A of the second working example, and a description thereof will be omitted. As an advantage of the modification of the second working example is the same as that of the second working example, a description thereof will be omitted.

### First Contact Portion, First Seal Dimension

Reference will be made to Fig. 14B. A cross-section of a first seal 43B of a butterfly door portion 31B of an air mix door 30B is of an approximate Y-shape overall. The first seal 43B is configured by a first base portion 44B supported by the first end side 42A of the first plate 41A, a first hot side contact portion 45B (a first contact portion), which is in contact with the first sheet face 35 in the full hot position, and a first cool side contact portion 46B, which is in contact with the case 20 in the full cool position, being integrated.

### Second Contact Portion, Second Seal Dimension

A cross-section of a second seal 53B of the butterfly door portion 31B of the air mix door 30B is of an approximate Y-shape overall, and a size thereof is the same as that of the first seal 43B. The second seal 53B is configured by a second base portion 54B supported by the second end side 52A of the second plate 51A, a second hot side contact portion 55B (a second contact portion), which is in contact with the second sheet face 36 in the full hot position, and a second cool side contact portion 56B, which is in contact with the case 20 in the full cool position, being integrated.

The forms of the seals according to the first and second working examples and this modification are examples, and provided that a seal is provided with flexibility for filling a gap between a door and a seat face, a form thereof is no object.

### Comparison of First Gap Dimension and Second Gap Dimension

The dimension from the first end side 42A to the first seat face 35, with the direction of compression of the first seal 43B as a reference, when the butterfly door portion 31B is in the full hot position is a first gap dimension δ1. The dimension from the second end side 52A to the second seat face 36, with the direction of compression of the second seal 53B as a reference, when the butterfly door portion 31B is in the full hot position is a second gap dimension δ2. The first gap dimension δ1 is smaller than the second gap dimension δ2 (δ1 < δ2).

### Third Working Example

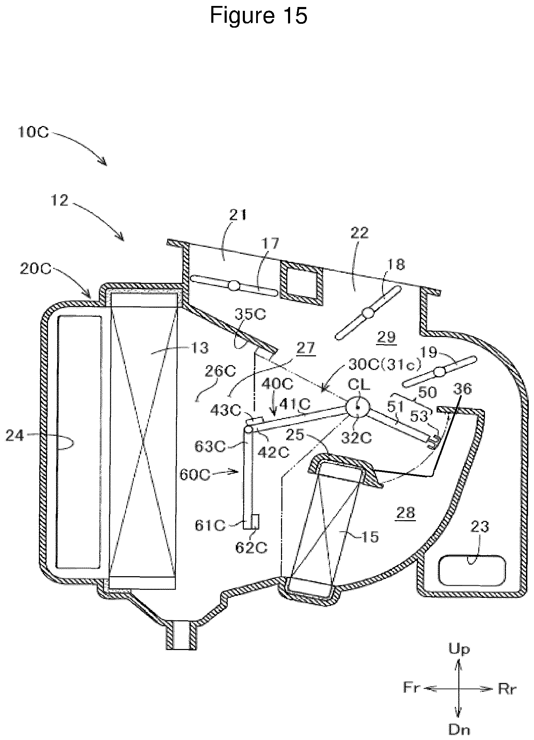

An air mix door is not limited to being configured only of the butterfly door portion 31, 31A, or 31B, as in the first and second working examples. A vehicle-use air conditioning device 10C according to a third working example is shown in Fig. 15. The same reference signs as in the first working example are allotted to configurations in common with those of the vehicle-use air conditioning device 10 of the first working example (refer to Fig. 2), and a description thereof will be omitted.

A butterfly door portion 31C of an air mix door 30C in the vehicle-use air conditioning device 10C includes a first door 40C and a second door 50 that can swing with a rotary shaft 32C as a center.

### Driven Door

The air mix door 30C of the third working example includes, in addition to the butterfly door portion 31C, a plate form driven door portion 60C that operates in conjunction with the first door 40C of the butterfly door portion 31C. The driven door portion 60C is such that one side 63C of a leading end side is connected farther to a first end side 42C side than a center of a first plate 41C of the first door 40C in such a way as to be able to pivot (able to swing), and a pair of pins or the like (not shown) are provided on left and right end sides on another side 61C of the leading end side. A guide rail (not shown), in which the pin or the like of the driven door portion 60C fits in such a way as to be able to slide, is formed on a side wall 26C of a case 20C.

On the butterfly door portion 31C swinging, a driving force is transmitted to the one side 63C of the leading end side of the driven door portion 60C via the first door 40C, the other side 61C of the leading end side of the driven door portion 60C moves along the guide rail of the side wall 26C, and the driven door portion 60C can be slid.

When the air mix door 30C is in the full hot position, a first seal 43C of the first door 40C is in contact with a first seat face 35C. When the air mix door 30C is in the full cool position, a seal 62C provided on the other side 61C of the leading end side of the driven door portion 60C is in contact with the case 20C.

Provided that the amount of compression of a first seal is greater than the amount of compression of a second seal, the present invention is not limited to the first and third working examples.

A vehicle-use air conditioning device of the present invention is appropriate for mounting in a passenger car.

### Description of Reference Numerals and Signs

10, 10A, 10B, 10C: vehicle-use air conditioning device
13: cooling heat exchanger
15: heating heat exchanger
20, 20C: case
26C: case side wall
27: cold air bypass passage
28: warm air passage
29: mixing space
30, 30A, 30B, 30C: air mix door
31, 31A, 31B, 31C: butterfly door portion
32, 32A, 32C: rotary shaft
35, 35C: first seat face
36: second seat face
40, 40A, 40B, 40C: first door
41, 41A, 41B, 41C: first plate
42, 42A, 42C: first end side
43, 43A, 43B, 43C: first seal
45, 45A, 45B: first contact portion (first hot side contact portion)
50, 50A, 50B: second door
51, 51A: second plate
52, 52A: second end side
53, 53A, 53B: second seal
55, 55A, 55B: second contact portion (second hot side contact portion)
60C: driven door portion
C1a, C1b: first compression amount
C2a, C2b: second compression amount
α1o, β1o: first seal dimension
α2o, β2o: second seal dimension
CL: rotary shaft central line
D1: first door diameter dimension
D2: second door diameter dimension
K: dimension ratio
γ1: first gap dimension
γ2: second gap dimension

## Claims

1. A vehicle-use air conditioning device (10, 10C), comprising:
a case (20, 20C) through whose interior air flows;
a cooling heat exchanger (13) that can cool air flowing through the case (20, 20C);
a heating heat exchanger (15) that can heat air that has flowed out of the cooling heat exchanger (13);
a warm air passage (28) along which air that has flowed out of the heating heat exchanger (15) flows;
a cold air bypass passage (27) along which air that has flowed out of the cooling heat exchanger (13) flows by bypassing the warm air passage (28);
an air mix door (30, 30C) that can adjust ratios of air that is to flow along the warm air passage (28) and air that is to flow along the cold air bypass passage (27); and
a mixing space (29) in which air that has flowed along the warm air passage (28) and air that has flowed along the cold air bypass passage (27) converge, wherein
the air mix door (30, 30C) includes a butterfly door portion (31, 31C) having a rotary shaft (32, 32C) provided approximately perpendicularly, with air flowing along the cold air bypass passage (27) as a reference, a first door (40, 40C) that extends from the rotary shaft (32, 32C) and can move farther to an upstream side than the rotary shaft (32, 32C), and a second door (50) that extends from the rotary shaft (32, 32C) in a direction approximately opposite to a direction in which the first door (40, 40C) extends, and whose dimension in an extension direction is shorter than that of the first door (40, 40C),
the butterfly door portion (31, 31C) can be positioned in a full cool position, wherein the first door (40, 40C) and the second door (50) swing with the rotary shaft (32, 32C) as a center, and the ratio of air to flow along the cold air bypass passage (27) is maximized by the first door (40, 40C) and the second door (50) being in contact with the case (20, 20C), a full hot position, wherein the ratio of air to flow along the warm air passage (28) is maximized by the first door (40, 40C) and the second door (50) being in contact with the case (20, 20C), and a temperature conditioning position, wherein the first door (40, 40C) and the second door (50) are separated from the case (20, 20C) and neither the ratio of air to flow along the cold air bypass passage (27) nor the ratio of air to flow along the warm air passage (28) is maximized,
the case (20, 20C) has a first seat face (35, 35C) that is in contact with the first door (40, 40C) when the butterfly door portion (31, 31C) is in the full hot position and a second seat face (36) that is in contact with the second door (50) when the butterfly door portion (31, 31C) is in the full hot position,
the first door (40, 40C) has a first plate (41, 41C) having a predetermined rigidity, and a first seal (43, 43C) that is provided on a first end side (42, 42C), which is an end side on a radial direction outer side of the first plate (41, 41C) with the rotary shaft (32, 32C) as a reference, and can block off a gap between the first end side (42, 42C) and the first seat face (35, 35C),
the first seal (43, 43C) can be compressed by being pressed against the first seat face (35, 35C) by the first end side (42, 42C) when the butterfly door portion (31, 31C) is in the full hot position,
the second door (50) has a second plate (51) having a predetermined rigidity, and a second seal (53) that is provided on a second end side (52), which is an end side on a radial direction outer side of the second plate (51) with the rotary shaft (32, 32C) as a reference, and can block off a gap between the second end side (52) and the second seat face (36),
the second seal (53) can be compressed by being pressed against the second seat face (36) by the second end side (52) when the butterfly door portion (31, 31C) is in the full hot position, wherein the first seal (43, 43C) has a first contact portion (45) that can come into contact with the first seat face (35, 35C), and the second seal (53) has a second contact portion (55) that can come into contact with the second seat face (36), **characterized in that**
when an amount of change in a dimension of the first seal (43, 43C) in the full hot position with respect to that in the temperature conditioning position, with a direction of compression of the first seal (43, 43C) as a reference, is a first compression amount,
and an amount of change in a dimension of the second seal (53) in the full hot position with respect to that in the temperature conditioning position, with a direction of compression of the second seal (53) as a reference, is a second compression amount,
the first compression amount is greater than the second compression amount,
when a dimension from the first end side (42, 42C) at a thickness direction center of the first plate (41, 41C) of the first door (40, 40C) to the first contact portion (45), with the direction of compression of the first seal (43, 43C) as a reference, is a first seal dimension α1o, and a dimension from the second end side (52) at a thickness direction center of the second plate (51) of the second door (50) to the second contact portion (55), with the direction of compression of the second seal (53) as a reference, is a second seal dimension α2o, when the butterfly door portion (31, 31C) is in the temperature conditioning position, the first seal dimension α1o is longer than the second seal dimension α2o, and when a dimension from a central line (CL) of the rotary shaft (32, 32C) to an end portion of the first seal (43, 43C) is a first door diameter dimension (D1) and a dimension from the central line (CL) of the rotary shaft (32, 32C) to an end portion of the second seal (53) is a second door diameter dimension (D2), with a radial direction of the rotary shaft (32, 32C) as a reference, and a ratio of the first door diameter dimension (D1) with respect to the second door diameter dimension (D2) is a dimension ratio K,
the first seal dimension α1o and the second seal dimension α2o have a relationship such that α1o > K × α2o.

2. The vehicle-use air conditioning device (10) according to claim 1, wherein
the air mix door (30) is configured of the butterfly door portion (31) only.

3. The vehicle-use air conditioning device (10C) according to claim 1, wherein
the air mix door (30C) includes a plate form driven door portion (60C) that operates in conjunction with the first door (40C) of the butterfly door portion (31C), and
the driven door portion (60C) is connected to the first end side side of the first plate (41C), and is provided in such a way as to be able to slide along a side wall (26C) of the case (20C).

## Patentansprüche

1. Fahrzeugklimaanlage (10, 10C), umfassend:
ein Gehäuse (20, 20C), durch dessen Inneres Luft strömt;
einen Kühlwärmetauscher (13), der Luft, die durch das Gehäuse (20, 20C) strömt, kühlen kann;
einen Heizwärmetauscher (15), der Luft, die aus dem Kühlwärmetauscher (13) ausgeströmt ist, erwärmen kann;
einen Warmluftkanal (28), entlang dem Luft strömt, die aus dem Heizwärmetauscher (15) ausgeströmt ist;
einen Kaltluft-Bypasskanal (27), entlang dem Luft, die aus dem Kühlwärmetauscher (13) ausgeströmt ist, unter Umgehung des Warmluftkanals (28) strömt;
eine Luftmischklappe (30, 30C), die Verhältnisse von Luft, die entlang des Warmluftkanals (28) strömen soll, und Luft, die entlang des Kaltluft-Bypasskanals (27) strömen soll, einstellen kann; und
einen Mischraum (29), in dem Luft, die entlang des Warmluftkanals (28) geströmt ist, und Luft, die entlang des Kaltluft-Bypasskanals (27) geströmt ist, zusammenströmen, wobei
die Luftmischklappe (30, 30C) einen Schmetterlingsklappenteil (31, 31C) umfasst, der eine Drehwelle (32, 32C) aufweist, die mit Luft, die entlang des Kaltluft-Bypasskanals (27) strömt, als Referenz annähernd senkrecht vorgesehen ist, eine erste Klappe (40, 40C), die sich von der Drehwelle (32, 32C) erstreckt und sich weiter auf eine stromaufwärtige Seite als die Drehwelle (32, 32C) bewegen kann, und eine zweite Klappe (50), die sich von der Drehwelle (32, 32C) in einer Richtung erstreckt, die annähernd entgegengesetzt zu einer Richtung ist, in der sich die erste Klappe (40, 40C) erstreckt, und deren Abmessung in einer Erstreckungsrichtung kürzer ist als die der ersten Klappe (40, 40C), der Schmetterlingsklappenteil (31, 31C) in einer vollständigen Kühlposition positioniert werden kann, wobei die erste Klappe (40, 40C) und die zweite Klappe (50) mit der Drehwelle (32, 32C) als Mittelpunkt schwingen und das Verhältnis der Luft, die entlang des Kaltluft-Bypasskanals (27) strömen soll, durch Kontakt der ersten Klappe (40, 40C) und der zweiten Klappe (50) mit dem Gehäuse (20, 20C) maximiert wird, einer vollständigen Heizposition, wobei das Verhältnis der Luft, die entlang des Warmluftkanals (28) strömen soll, durch Kontakt der ersten Klappe (40, 40C) und der zweiten Klappe (50) mit dem Gehäuse (20, 20C) maximiert wird, und einer Temperaturkonditionierungsposition, wobei die erste Klappe (40, 40C) und die zweite Klappe (50) vom Gehäuse (20, 20C) getrennt sind und weder das Verhältnis der Luft, die entlang des Kaltluft-Bypasskanals (27) strömen soll,
noch das Verhältnis der Luft, die entlang des Warmluftkanals (28) strömen soll, maximiert ist, das Gehäuse (20, 20C) eine erste Sitzfläche (35, 35C), die mit der ersten Klappe (40, 40C) in Kontakt ist, wenn sich der Schmetterlingsklappenteil (31, 31C) in der vollständigen Heizposition befindet, und eine zweite Sitzfläche (36) aufweist, die mit der zweiten Klappe (50) in Kontakt ist, wenn sich der Schmetterlingsklappenteil (31, 31C) in der vollständigen Heizposition befindet, die erste Klappe (40, 40C) eine erste Platte (41, 41C) mit einer vorbestimmten Steifigkeit und eine erste Dichtung (43, 43C) aufweist, die auf einer ersten Endseite (42, 42C) vorgesehen ist, welche eine Endseite auf einer radialen Richtungsaußenseite der ersten Platte (41, 41C) mit der Drehwelle (32, 32C) als Referenz ist, und einen Spalt zwischen der ersten Endseite (42, 42C) und der ersten Sitzfläche (35, 35C) abdichten kann, die erste Dichtung (43, 43C) komprimiert werden kann, indem sie durch die erste Endseite (42, 42C) gegen die erste Sitzfläche (35, 35C) gedrückt wird, wenn sich der Schmetterlingsklappenteil (31, 31C) in der vollständigen Heizposition befindet, die zweite Klappe (50) eine zweite Platte (51) mit einer vorbestimmten Steifigkeit und eine zweite Dichtung (53) aufweist, die auf einer zweiten Endseite (52) vorgesehen ist, welche eine Endseite auf einer radialen Richtungsaußenseite der zweiten Platte (51) mit der Drehwelle (32, 32C) als Referenz ist, und einen Spalt zwischen der zweiten Endseite (52) und der zweiten Sitzfläche (36) abdichten kann, die zweite Dichtung (53) komprimiert werden kann, indem sie durch die zweite Endseite (52) gegen die zweite Sitzfläche (36) gedrückt wird, wenn sich der Schmetterlingsklappenteil (31, 31C) in der vollständigen Heizposition befindet, wobei die erste Dichtung (43, 43C) einen ersten Kontaktbereich (45) aufweist, der mit der ersten Sitzfläche (35, 35C) in Kontakt kommen kann, und die zweite Dichtung (53) einen zweiten Kontaktbereich (55) aufweist, der mit der zweiten Sitzfläche (36) in Kontakt kommen kann, **dadurch gekennzeichnet, dass** wenn ein Änderungsbetrag einer Abmessung der ersten Dichtung (43, 43C) in der vollständigen Heizposition in Bezug auf jene in der Temperaturkonditionierungsposition, mit einer Kompressionsrichtung der ersten Dichtung (43, 43C) als Referenz, ein erster Kompressionsbetrag ist, und ein Änderungsbetrag einer Abmessung der zweiten Dichtung (53) in der vollständigen Heizposition in Bezug auf jene in der Temperaturkonditionierungsposition, mit einer Kompressionsrichtung der zweiten Dichtung (53) als Referenz, ein zweiter Kompressionsbetrag ist, der erste Kompressionsbetrag größer als der zweite Kompressionsbetrag ist, wenn eine Abmessung von der ersten Endseite (42, 42C) an einem Dickenmittelpunkt der ersten Platte der ersten Klappe (40, 40C) zum ersten Kontaktbereich (45), mit der Kompressionsrichtung der ersten Dichtung (43, 43C) als Referenz, eine erste Dichtungsabmessung α1ο ist, und eine Abmessung von der zweiten Endseite (52) an einem Dickenmittelpunkt der zweiten Platte (51) der zweiten Klappe (50) zum zweiten Kontaktbereich (55), mit der Kompressionsrichtung der zweiten Dichtung (53) als Referenz, eine zweite Dichtungsabmessung α2ο ist, wenn sich der
Schmetterlingsklappenteil (31, 31C) in der Temperaturkonditionierungsposition befindet, die erste Dichtungsabmessung α1ο länger als die zweite Dichtungsabmessung α2ο ist, und wenn eine Abmessung von einer Mittellinie (CL) der Drehwelle (32, 32C) zu einem Endabschnitt der ersten Dichtung (43, 43C) eine erste Klappendurchmesserabmessung (D1) ist und eine Abmessung von der Mittellinie (CL) der Drehwelle (32, 32C) zu einem Endabschnitt der zweiten Dichtung (53) eine zweite Klappendurchmesserabmessung (D2) ist, mit einer radialen Richtung der Drehwelle (32, 32C) als Referenz, und ein Verhältnis der ersten Klappendurchmesserabmessung (D1) in Bezug auf die zweite Klappendurchmesserabmessung (D2) ein Abmessungsverhältnis K ist, die erste Dichtungsabmessung α1ο und die zweite Dichtungsabmessung α2ο eine Beziehung derart aufweisen, dass α1ο > K × α2ο.

2. Fahrzeugklimaanlage (10) nach Anspruch 1, wobei die Luftmischklappe (30) ausschließlich aus dem Schmetterlingsklappenteil (31) gebildet ist.

3. Fahrzeugklimaanlage (10C) nach Anspruch 1, wobei die Luftmischklappe (30C) einen plattenförmigen angetriebenen Klappenteil (60C) umfasst, der in Verbindung mit der ersten Klappe (40C) des Schmetterlingsklappenteils (31C) betätigt wird, und der angetriebene Klappenteil (60C) mit der ersten Endseitenseite der ersten Platte (41C) verbunden ist und so vorgesehen ist, dass er entlang einer Seitenwand (26C) des Gehäuses (20C) gleiten kann.

## Revendications

1. Dispositif de climatisation pour véhicule (10, 10C), comprenant :
un boîtier (20, 20C) à travers l'intérieur duquel de l'air circule ;
un échangeur de chaleur de refroidissement (13) pouvant refroidir l'air circulant à travers le boîtier (20, 20C) ;
un échangeur de chaleur de chauffage (15) pouvant chauffer l'air qui s'est écoulé hors de l'échangeur de chaleur de refroidissement (13) ;
un passage d'air chaud (28) le long duquel circule l'air qui s'est écoulé hors de l'échangeur de chaleur de chauffage (15) ;
un passage de dérivation d'air froid (27) le long duquel circule l'air qui s'est écoulé hors de l'échangeur de chaleur de refroidissement (13) en contournant le passage d'air chaud (28) ;
une porte de mélange d'air (30, 30C) pouvant ajuster les ratios de l'air devant circuler le long du passage d'air chaud (28) et de l'air devant circuler le long du passage de dérivation d'air froid (27) ; et
un espace de mélange (29) dans lequel convergent l'air ayant circulé le long du passage d'air chaud (28) et l'air ayant circulé le long du passage de dérivation d'air froid (27), dans lequel
la porte de mélange d'air (30, 30C) comprend une partie de porte papillon (31, 31C) ayant un arbre rotatif (32, 32C) disposé approximativement perpendiculairement, en prenant comme référence l'air circulant le long du passage de dérivation d'air froid (27), une première porte (40, 40C) qui s'étend depuis l'arbre rotatif (32, 32C) et peut se déplacer plus loin vers un côté amont que l'arbre rotatif (32, 32C), et une deuxième porte (50) qui s'étend depuis l'arbre rotatif (32, 32C) dans une direction approximativement opposée à la direction dans laquelle s'étend la première porte (40, 40C), et dont la dimension dans la direction d'extension est plus courte que celle de la première porte (40, 40C), la partie de porte papillon (31, 31C) pouvant être positionnée dans une position tout froid, dans laquelle la première porte (40, 40C) et la deuxième porte (50) pivotent avec l'arbre rotatif (32, 32C) comme centre, et le ratio de l'air devant circuler le long du passage de dérivation d'air froid (27) est maximisé par la première porte (40, 40C) et la deuxième porte (50) étant en contact avec le boîtier (20, 20C), une position tout chaud, dans laquelle le ratio de l'air devant circuler le long du passage d'air chaud (28) est maximisé par la première porte (40, 40C) et la deuxième porte (50) étant en contact avec le boîtier (20, 20C), et une position de conditionnement de température, dans laquelle la première porte (40, 40C) et la deuxième porte (50) sont séparées du boîtier (20, 20C) et ni le ratio de l'air devant circuler le long du passage de dérivation d'air froid (27) ni le ratio de l'air devant circuler le long du passage d'air chaud (28) n'est maximisé, le boîtier (20, 20C) présente une première face de siège (35, 35C) qui est en contact avec la première porte (40, 40C) lorsque la partie de porte papillon (31, 31C) est en position tout chaud et une deuxième face de siège (36) qui est en contact avec la deuxième porte (50) lorsque la partie de porte papillon (31, 31C) est en position tout chaud, la première porte (40, 40C) présente une première plaque (41, 41C) ayant une rigidité prédéterminée, et un premier joint d'étanchéité (43, 43C) qui est disposé sur un premier côté d'extrémité (42, 42C), qui est un côté d'extrémité sur le côté extérieur dans la direction radiale de la première plaque (41, 41C) en prenant l'arbre rotatif (32, 32C) comme référence, et peut bloquer un espace entre le premier côté d'extrémité (42, 42C) et la première face de siège (35, 35C), le premier joint d'étanchéité (43, 43C) peut être comprimé en étant pressé contre la première face de siège (35, 35C) par le premier côté d'extrémité (42, 42C) lorsque la partie de porte papillon (31, 31C) est en position tout chaud, la deuxième porte (50) présente une deuxième plaque (51) ayant une rigidité prédéterminée, et un deuxième joint d'étanchéité (53) qui est disposé sur un deuxième côté d'extrémité (52), qui est un côté d'extrémité sur le côté extérieur dans la direction radiale de la deuxième plaque (51) en prenant l'arbre rotatif (32, 32C) comme référence, et peut bloquer un espace entre le deuxième côté d'extrémité (52) et la deuxième face de siège (36), le deuxième joint d'étanchéité (53) peut être comprimé en étant pressé contre la deuxième face de siège (36) par le deuxième côté d'extrémité (52) lorsque la partie de porte papillon (31, 31C) est en position tout chaud, dans lequel le premier joint d'étanchéité (43, 43C) présente une première partie de contact (45) pouvant venir en contact avec la première face de siège (35, 35C), et le deuxième joint d'étanchéité (53) présente une deuxième partie de contact (55) pouvant venir en contact avec la deuxième face de siège (36), **caractérisé en ce que** lorsqu'une quantité de variation d'une dimension du premier joint d'étanchéité (43, 43C) en position tout chaud par rapport à celle en position de conditionnement de température, en prenant comme référence la direction de compression du premier joint d'étanchéité (43, 43C), est une première quantité de compression, et qu'une quantité de variation d'une dimension du deuxième joint d'étanchéité (53) en position tout chaud par rapport à celle en position de conditionnement de température, en prenant comme référence la direction de compression du deuxième joint d'étanchéité (53), est une deuxième quantité de compression, la première quantité de compression est supérieure à la deuxième quantité de compression, lorsqu'une dimension depuis le premier côté d'extrémité (42, 42C) au centre dans la direction d'épaisseur de la première plaque de la première porte (40, 40C) jusqu'à la première partie de contact (45), en prenant comme référence la direction de compression du premier joint d'étanchéité (43, 43C), est une première dimension de joint α1ο, et qu'une dimension depuis le deuxième côté d'extrémité (52) au centre dans la direction d'épaisseur de la deuxième plaque (51) de la deuxième porte (50) jusqu'à la deuxième partie de contact (55), en prenant comme référence la direction de compression du deuxième joint d'étanchéité (53), est une deuxième dimension de joint α2ο, lorsque la partie de porte papillon (31, 31C) est en position de conditionnement de température, la première dimension de joint α1ο est plus longue que la deuxième dimension de joint α2ο, et lorsqu'une dimension depuis une ligne centrale (CL) de l'arbre rotatif (32, 32C) jusqu'à une partie d'extrémité du premier joint d'étanchéité (43, 43C) est une première dimension de diamètre de porte (D1) et qu'une dimension depuis la ligne centrale (CL) de l'arbre rotatif (32, 32C) jusqu'à une partie d'extrémité du deuxième joint d'étanchéité (53) est une deuxième dimension de diamètre de porte (D2), en prenant comme référence la direction radiale de l'arbre rotatif (32, 32C), et qu'un ratio de la première dimension de diamètre de porte (D1) par rapport à la deuxième dimension de diamètre de porte (D2) est un ratio de dimension K, la première dimension de joint α1ο et la deuxième dimension de joint α2ο ont une relation telle que α1ο > K × α2ο.

2. Dispositif de climatisation pour véhicule (10) selon la revendication 1, dans lequel la porte de mélange d'air (30) est constituée uniquement de la partie de porte papillon (31).

3. Dispositif de climatisation pour véhicule (10C) selon la revendication 1, dans lequel la porte de mélange d'air (30C) comprend une partie de porte entraînée en forme de plaque (60C) qui fonctionne conjointement avec la première porte (40C) de la partie de porte papillon (31C), et la partie de porte entraînée (60C) est reliée au côté du premier côté d'extrémité de la première plaque (41C), et est disposée de manière à pouvoir coulisser le long d'une paroi latérale (26C) du boîtier (20C).
